# EUROPEAN PATENT SPECIFICATION

(11) **EP 3 978 453 B1**
(45) Date of publication and mention of the grant of the patent: **16.08.2023**
(21) Application number: 20206627.0
(22) Date of filing: 10.11.2020
(51) Int. Cl.: C03C 17/34, B32B 17/00, C03C 27/10

(54) **SOLAR CONTROL GLAZING FOR AUTOMOBILE AND ITS MANUFACTURE**
SONNENSCHUTZVERGLASUNG FÜR KRAFTFAHRZEUGE UND DEREN HERSTELLUNG
VITRAGE DE CONTRÔLE SOLAIRE POUR AUTOMOBILE ET SA FABRICATION

(30) Priority: 30.09.2020 FR 2009977
(43) Date of publication of application: 06.04.2022
(73) Proprietor: Saint-Gobain Glass France, 92400 Courbevoie (FR)
(72) Inventor: GIRARD, Pauline, 60200 Compiègne (FR); HAGEN, Jan, 53123 Bonn (DE); LI, Daming, Minhang Development zone Shanghai (CN)
(74) Representative: Saint-Gobain Recherche

(56) References cited:
- US-A1- 2002 030 882
- US-A1- 2008 079 894
- US-A1- 2013 183 489
- US-A1- 2014 141 222

## Description

The present invention deals with the field of solar control glasses (or glazings) for automobiles.

The present tendency in the automotive industry is to increase the glass surface, to improve the passenger comfort as well as to promote autonomous driving. A large part of the passenger comfort generally results from the temperature control in his compartment, glazings being usually the largest sources of heat penetration inside the cars, generating possible greenhouse effects. The control of the temperature inside vehicles is not only essential for the well-being of the users but is also important for the protection of all electronics components integrated in cars which are sensitive to high temperatures. Moreover, with the development of numerous communicating media and autonomous driving, promoting or improving the connectivity or speed of connectivity in the future cars also become an essential part of the vehicle functioning. It thus appears essential inside future cars to both promote solar control (solar-control being the property of regulating the solar heat energy amount allowed to pass through a glass into a closed space like a building or vehicle) while improving or protecting the speed of connectivity.

The solar control functions in automobiles are traditionally achieved by silver-based coatings. However, the high frequencies, used for example for the connectivity of mobile phone, are significantly damped due to silver conductivity generating Faraday cage effect. Dielectric based coatings, traditionally deposited by magnetron, can also possibly have heat-reflective properties, however, this type of coating is often considered to be inapplicable for architectural and automotive applications because of difficulties in production, this kind of coating indeed often requiring numerous layers and a very thick total thickness (compared to silver-based coatings) and thus a long deposition time also impairing costs.

US 2014/141222 A1 discloses substrates with solar control coatings comprising pairs of low refractive index / high refractive index layers

The present invention aims at finding a new glazing for automotive industry which allows to obtain a good solar control in vehicles while keeping a good visibility through the glazing and while promoting or improving the speed of connectivity in said vehicles, this glazing further being advantageously easily obtainable without undue costs.

This objective is achieved through a product according to claim 1. A process according to claim 12 equally achieves the objective.

The present invention thus concerns a glazing (or glass), especially for the automotive industry and intended in particular to equip an automobile or vehicle, this glazing having solar control properties (without these properties impairing sensitively the visibility) while at the same time presenting high transparency to high frequencies (as needed for the transmission of signals like GSM and Wi-Fi signals), this glazing comprising at least a glass sheet (or pane or plate or substrate) coated, on at least a part of at least one of its faces, with at least a dielectric stack of layers comprising, and advantageously only consisting of, two types of layers:
- a first type of layer(s) being, for each layer of this type, a porous layer of dielectric material presenting pores whose size is in the range from 20 to 120 nm, said layer having a refractive index of less than 1.4 and a thickness in the range from 50 to 200 nm, and
- a second type of layer(s) being, for each layer of this type, a layer of dielectric material (and said layer) having a refractive index of greater than or equal 1.7 and a thickness in the range from 50 to 200 nm, each layer of the first type within said dielectric stack being between two layers of the second type, the thickness of said dielectric stack (of the 2 types of dielectric layers) being at most 1000 nm.

By layer it is understood a uniform layer of a same material, even if for example said layer has been obtained by several deposition passages. Depending on the thickness and method of deposition, several successively deposited thin sub-layers can indeed be needed to form one or the other type of dielectric layers.

By thickness of a layer or of the dielectric stack, it is understood the geometric (also called geometrical or physical or real) final (once cured) thickness of said layer or stack respectively.

By "size" of a pore it is understood the diameter of the sphere in which the pore fits in, the pores being mostly approximately round or oval in shape, and by "size of the pores" according to the invention it is understood that at least 90% in number of the pores present a size as defined.

It is also to be noted that the layers refractive indexes are measured with an ellipsometer (for example an ellipsometer sold by the company Sentech) at the electromagnetic wavelength of 550nm.

It is also to be noted that the terms "first" or "second" in the previously defined invention are only used for distinguishing the two types of layers, and do not refer in said definition to any order of deposition of the layers. Further, "glass sheet" can also be designated hereafter by the following designations "glass pane" or "glass plate" or "glass substrate" or even "glass". Further the dielectric stack in the previously defined invention is also hereafter referred to as a "solar control stack" or "solar control functionalized stack" in view of its solar control properties.

The first type of layer(s) (with low refractive index) is a layer or layers obtained by a wet coating process (such porous layer(s) not being obtainable in particular by a magnetron-type process), and advantageously the second type of layer(s) (with high refractive index) is or are also obtained by a wet coating process, as well as the whole dielectric stack is advantageously a wet coating stack (that is to say obtained by wet coating process). Such layers obtained by such a type of deposition method (wet coating process) are thereafter called "wet coating layers "or "wet coatings". Preferably, wet coatings layers according to the present invention are furthermore sol-gel layers (namely obtained by sol-gel elaboration process).

It is to be noted that, though wet coating layers are privileged, it is yet not excluded in an alternative embodiment, that the layer in contact with the glass sheet, which in particular is one of the layers of the second type in the case when the solar control stack is deposited directly on the glass sheet, is alternatively deposited by magnetron, the other layers of the stack yet advantageously remaining wet coating layers (including where appropriate the layer(s) of the second type which is/are deposited on a previous layer, that is to say which is/are not deposited directly in contact with the glass)

The dielectric stack according to the invention, using an arrangement based on constructive optical interferences alternating layers of high and low refractive index as described above, allows to obtain the looked-for properties of both solar control and high transparency to high frequencies without these properties impairing sensitively the glazing visibility. Though different combination of coatings with high and low refractive index already exist in the academic domain for different applications, the inventors have found, for the present field where thin coatings are traditionally made by magnetron, and while looking for a new combination of properties, a new specific combination of alternating layers precisely selected, this combination, among others, including a very low refractive index thin layer of submicronic thickness with nanopores (pores of submicronic size) of sufficient size (at least above or equal to 20 nm) obtained in particular by wet coating, especially a sol-gel layer, as further described subsequently.

The solar-control stack of dielectric layers alternating high and low refractive index of the present invention allows to reduce the total transmitted heat radiation (or "total solar transmittance", called TTS value) through the glazing without adversely affecting the optical properties of the initial (uncoated) glazing ; in particular, for a luminous transmission TL of the glazing in the visible range above 70%, the TTS value can notably be reduced by several percents compared to the uncoated glazing. Advantageously, the stack according to the invention allows to set said TTS value (measured in particular according to international standard ISO 13837) under 58%, in particular around 50 - 55% or less as shown in the future examples, a too high TTS value implying too much heat radiation transmitted by the glazing, and a too low TTS value possibly meaning a too dark glazing preventing persons behind to properly see through it. Further to the good thermal comfort it ensures inside the car, said stack also improves the compatibility of car glazing with requirements for mobile communication. Said stack, composed of at least three layers of thickness of no more than 200 nm each, combining high, low and high refractive indexes and obtained advantageously by wet coatings for the majority or the totality of them, said layers being preferably sol-gel layers, also has the advantages to be cost efficient (especially in comparison to coatings of the magnetron type) and mechanically resistant and does not cause tremendous difficulties in elaboration due, in particular, to the controlled limited thicknesses of its constituting layers, which can be deposited easily and relatively rapidly.

In the solar control dielectric stack of the present invention alternating high and low refractive index dielectric layers, the more external layers are high refractive index layers (namely layers of the second type), the dielectric layers are in contact with each other, and the dielectric stack is preferably and advantageously a purely dielectric stack constituted only with said previously defined dielectric layers alternating high and low refractive indexes. The stack, and preferably the whole coating including said stack in the zone covered by said stack, is in particular devoid of any silver layer or tin oxide layer or similar conductive oxide layer (usual typical layers which are used for solar control) herein, which would in particular impair the good transparency to high frequencies. The sole stack in itself is sufficient to obtain the looked for properties, the coating on the zone covered by the stack possibly advantageously consisting only in said stack with no other layer above or under.

Preferably, the dielectric stack according to the invention is a three-layers or a five-layers stack (the two types of dielectric layers being built up alternately on top of one another). It thus comprises either one layer of the first type between two layers of the second type, or two layers of the first type and three layers of the second type, the layers of the first type and those of the second type being disposed alternately. For the three-layers stack, it thus consists in, in the following order of deposition on the glass:
- layer 1 : a wet coating dielectric layer having a refractive index of greater than or equal to 1.7 and a thickness in the range from 50 to 200 nm (layer of the second type)
- layer 2 : a wet coating dielectric porous layer presenting pores whose size is in the range from 20 to 120 nm, said layer having a refractive index of less than 1.4 and a thickness in the range from 50 to 200 nm (layer of the first type),
- layer 3 : a wet coating dielectric layer having a refractive index of greater than or equal to 1.7 and a thickness in the range from 50 to 200 nm (layer of the second type),
the thickness of said three-layers dielectric stack being at least 150 nm and preferably being at most (or "being less than or equal to" or "not exceeding") 600 nm, in particular being less than 600 nm, and preferably being at most 500 nm.

For the five-layers stack, it consists in : the layers 1, 2 and 3 as mentioned above for the three-layers stack, on top of which are also deposited, in the following order:
- layer 4 : a wet coating dielectric porous layer presenting pores whose size is in the range from 20 to 120 nm, said layer having a refractive index of less than 1.4 and a thickness in the range from 50 to 200 nm (layer of the first type),
- layer 5 : a wet coating dielectric layer having a refractive index of greater than or equal to 1.7 and a thickness in the range from 50 to 200 nm (layer of the second type),
the thickness of said five-layers dielectric stack being at least 250 nm and being at most 1000 nm, in particular being less than 1000 nm, and preferably being at most 850 nm.

The different layers of the same type possibly present inside a same stack can be either identical or different (though each fulfilling the defining conditions of the type of layer), in particular can have a different thickness and/or a different composition (and consequently a different refractive index, though each inside the range of thickness and refractive index given when defining the type of layer). Preferably the thickness of the first type of layer(s) according to the invention is in the range from 60 to 200 nm, more preferably in the range from 80 to 200 nm, notably in the range from 100 nm to 200 nm, in particular from 120 to 200 nm, or even from 130 nm to 200 nm, the thickness of the second type of layer(s) is in the range from 55 nm to 180 nm, more preferably in the range from 60 to 180 nm, in particular from 65 to 170 nm, and the (final) thickness of the dielectric stack (of the 2 types of dielectric layers) is in the range from 170 nm to 850 nm, more preferably in the range from 180 nm to 850 nm, in particular in the range from 200 to 800 nm.

The dielectric layers used are (metal, metalloid or mixed) nitride or oxide layers. Each layer of nitride or of oxide is advantageously constituted essentially (to at least 80% by weight, preferably to at least 90% or even to at least 95% by weight), or even only (with the exception of any impurities present), nitrogen (for nitrides) or oxygen (for oxides), and one or more metals and/or metalloids mentioned in its name. Yet, the designation "metal or metalloid oxide or nitride" does not exclude, where appropriate, the presence of other chemical elements than those mentioned in the name of the nitride or of the oxide concerned, nor does not prejudge the real stoichiometry of the layer. Each layer can in particular be doped or comprise a small amount of one or more chemical elements added as dopants such as aluminum, zirconium, titanium, or boron. The level of dopant(s) or other components or chemical elements than those mentioned in the layer concerned is however less than 20%, preferably less than 10%, by weight (in the layer), in particular less than 5 by weight, or even equal to zero.

The dielectric layers used are furthermore advantageously wet coating layers and preferably each layer is a sol-gel layer (ie obtained by a sol-gel elaboration process), obtained in particular from inorganic precursors. The whole stack can thus be sol-gel layers made, or even the whole coating on the part of the glazing face coated by the dielectric stack, or even the whole coating on the glazing. Chemical elements at the base of sol-gel layers can in particular include (as an essential constituent material) at least one compound (simple or mixed oxide(s), alkoxyde(s), etc.) of at least one of the following elements: Si, Ti, Zr, W, Sb, Hf, Ta, V, Mg, Al, Mn, Co, Ni, Zn, Ce.

The initial compositions of the sol-gel layers can comprise as well other components which, for some, are possibly intended to be removed during elaboration of the layer. In particular, the first type of layer(s) can advantageously initially contain pore formers (in particular of the poly (methyl methacrylate) (called PMMA) or polystyrene type) as explained hereafter. The initial compositions of the sol-gel layers can also contain dopants, dyes, surfactants, rheological agents, etc.

In order to decrease the refractive index, porosity is in particular included within the first type of layer(s) according to the invention, either by the initial addition of pore-formers agents (the combustion of which, for example, is freeing the pores where appropriate), such as polymer particles, core-shell (or core@shells) nanostructures (which are nanoparticles encapsulated and protected by an outer shell) or surfactants, and/or by the process of elaboration (such as generating pores by agglomeration of particles), the volume of porosity being controlled (for example by the quantity of pore formers added) depending on the wished refractive index. The pores of the porous structure are possibly filled (in particular with a pore former) before curing of the layer and are generally "empty" (or rather "just filled with air") after curing/on the final glazing.

The porosity of the first type of layer(s) is preferably formed of pores of the same approximate size, the size of the pores being at least 20 nm, preferably at least 30 nm, more preferably at least 40 nm, and in particular at least 50 nm, and being at most 120 nm, preferably at most 100 nm. The proportion of pores in volume (compared to the volume of the porous layer) can be between 20% and 90%, preferably in the range from 30 to 80%, and in particular in the range from 35 to 75% or even in the range from 40 to 70% in volume. The pores can have an approximately round or elongated shape, in particular a rice grain type shape, and preferably have a substantially spherical or oval shape. The porous layer(s) preferably has/have a homogeneous distribution throughout its/their thickness.

The porous layer(s) is/are advantageously obtained using at least one solid pore-forming agent (or pore-former), enabling to adjust the size of the layer(s) pores depending on the own pore-former size. The solid pore-former(s) can be available in several forms. It can be in the form of a colloidal dispersion, or in the form of a powder, dispersible in the aqueous or alcohol solvent used to for the sol or compatible with said solvent. It is preferably used in particulate form, in particular (quasi) spherical, and preferably well individualized in order to easily control the size of the pores. The pore-former can be mono or multi-components (in particular two-components with a core material and a shell), and can be inorganic, organic or hybrid, in particular polymeric. It can be a hollow pore-forming agent, like hollow silica beads, or a full-solid pore-forming agent, like one-component or two-components (in particular with a core material and a shell) polymeric beads. A polymeric pore-forming agent is generally removed to obtain the porous layer(s), the pores of which can be substantially the shape and size of the pore-former(s).

The solid pore-former allows a better control of the size of the pores, in particular access to large sizes, a better control of the organization of the pores, in particular a homogeneous distribution, a better control of the pore rate in the layer and a better reproducibility. Said solid pore-former can be distinguished from other known and usually used pore-formers such as micelles of cationic surfactant molecules, or anionic or nonionic surfactants, or amphiphilic molecules, which other pore-formers rather generate pores of small size, roughly round or in the form of channels of small width and generally having a pore size of between 2 and 5 nm.

Preferably, the pore-former(s) used for obtaining the first type of layer of the stack according to the invention, is/are chosen among the following polymers: polymethyl methacrylate (PMMA), methyl (meth) acrylate / (meth) acrylic acid copolymers, polycarbonate polymers, polyester, polystyrene, etc. or a combination thereof, and most preferably is/are a polymethyl methacrylate (PMMA).

The material and porosity of the first type layer(s) are preferably chosen so that the layer(s) has/have a refractive index at 550 nm less than or equal to 1.35, or even less than or equal to 1.3 or even closer to 1, in particular in the range from 1.2 to 1.35 or from 1 to 1.3 or 1 to 1.35.

The refractive index can be adjusted as a function of the pores volume. It can be used as a first approximation the following relation for the calculation of the index : n=f.n₁+(1-f).nₚₒᵣₑₛ, where f is the volume fraction of the material constituting the layer and n₁ its refractive index and nₚₒᵣₑₛ is the pore index generally equal to 1 if pores are empty (filled with air).

Preferably, the first-type of layer(s) of the stack (or at least one or each layer of the first type when several) contains or is formed of silica (or silicon dioxide SiO₂), providing in particular good adhesion and compatibility with a glass substrate, the layer(s) being essentially silica-based with a silica content in the (final) layer(s) preferably being at least 80 wt% or at least 90 wt% (percentage in weight compared to the weight of said layer(s)), said silica layer(s) being obtained by sol-gel technology from a silica precursor.

By choosing a porous silica layer, the refractive index can easily go down under 1.35, and even down to 1.05, and this for any thickness of the layer within the defined range. As a comparison, at 550 nm, a non-porous silica layer typically has a refractive index of the order of at least 1.46.

The obtained porous layer, essentially mineral, is mechanically stable, has good cohesion, and does not collapse, even for high pore concentrations. The thickness of (each of) the first type of dielectric layer(s) is preferably from 60 to 200 nm, more preferably from 80 to 200 nm, notably from 100 nm to 200 nm, in particular from 120 to 200 nm, or even from 130 nm to 200 nm.

The material of the second type of dielectric layer(s) is preferably chosen so that the layer(s) has/have a refractive index at 550 nm more than 1.7, advantageously higher than or equal to 1.8, preferably greater than or equal to 1.9, and, even more preferably, greater than or equal to 2. Said refractive index is in particular advantageously in the range from 1.8 to 2.1, or preferably 1.9 to 2.1, or even preferably 2 to 2.1. Material with a refractive index above or equal to 1.7 can in particular contain silicon nitride Si₃N₄, zinc oxide ZnO, titanium dioxide TiO₂, zirconium dioxide ZrO₂, hafnium oxide HfO₂, vanadium oxide V₂O₅, niobium oxide Nb₂O₅, tantalum oxide Ta₂O₅, tungsten oxide WO₃, possibly doped, but it can also be in the present invention a material with a lower refractive index to which a dopant (or doping agent) is added so as to increase the refractive index, like doped silica SiO₂.

Preferably, the dielectric layer(s) of the second type is/are obtained by the sol-gel technology using a TiO₂ precursor or a ZrO₂ precursor or a SiO₂ precursor, integrating or not a dopant (depending on the looked-for layer refraction index and the precursor used) in the form of nanoparticles (that is to say particles with a submicronic size, preferably under 120 nm, or less than or equal to 100 nm) with a high refractive index, likeTiO₂ nanoparticles, HfO₂ nanoparticles, Ta₂O₅ nanoparticles, etc. Such nanoparticles, presenting a size (diameter of the sphere in which the particles fits in) smaller than the layer thickness (for example around 70 nm for a (final) layer thickness of 100 nm) are used as dopants when the precursor or medium used has an insufficient refractive index, in order that the obtained layer can present the looked-for high refractive index. Preferably, the particle size of the doping agent is in the range from 10 to 100 nm, in particular does not exceed 70 nm or 50 nm, and the content of the dopant in the layer does not exceed 20%, in particular is from 1 to 10 % in weight, when such dopant is used.

The dopants (or doping agents) used when appropriate can in particular be made in a material selected from titanium dioxide, ferric oxide (like iron trioxide), zirconium oxide, titanium nitride, cobalt aluminate, cobalt zincate, hafnium oxide or tantalum oxide and a combination thereof. Preferably, said doping agent used when appropriate for the second type of layer is titanium dioxide, most preferably rutile-type titanium dioxide.

In a preferred embodiment, a layer (in particular a sol-gel layer) of TiO₂ is used as a dielectric layer of the second type in the stack. The dielectric stack can thus be in particular the following sequence of layers: TiO₂/SiO₂/TiO₂ or TiO₂/SiO₂/TiO₂/SiO₂/TiO₂. The refractive index of the TiO₂ layers can if needed be further increased by the addition of dopants/nanoparticles, likeTiO₂ nanoparticles, or by reducing the porosity of the layers or modifying their crystalline structure.

In a second preferred embodiment, a layer (in particular a sol-gel layer) of a material selected in the group of metalloid oxides, in particular and preferably SiO₂, with a (nanoparticles) doping agent included, preferably TiO₂ nanoparticles, most preferably rutile-type titanium dioxide nanoparticles, is used as a dielectric layer of the second type. The dielectric stack can thus be in particular the following sequence of layers: doped-SiO₂/SiO₂/doped-SiO₂ or doped-SiO₂/SiO₂/doped-SiO₂/SiO₂/doped-SiO₂.

For the second type of dielectric layers, the stack comprising necessarily at least two of these second-type layers, a mix can also be made between non-doped layers (like TiO₂) and doped layers (like doped SiO₂, as described above); for example the dielectric stack can be the following sequence of layers: doped-SiO₂/SiO₂/TiO₂ or doped-SiO₂/SiO₂/TiO₂/SiO₂/doped-SiO₂. or doped-SiO₂/SiO₂/doped-SiO₂/SiO₂/TiO₂ or TiO₂/SiO₂/doped-SiO₂/SiO₂/TiO₂, etc.

Preferably, the thickness of each of the second type of layers is in the range from 55 nm to 180 nm, more preferably in the range from 60 to 180 nm, in particular from 65 to 170 nm.

The precursors used for making the sol (or solution, in particular in water or alcohol, of said precursors) deposited for obtaining the sol-gels layers according to the invention can be for example alkoxides or halides or titanates, etc, with organic, linear, branched, cyclic or aromatic group(s) (such as methyl, vinyl, phenyl, etc.). For example, the porous first type of layer(s) can be made from a sol of tetraethoxysilane (or tetraethyl orthosilicate or TEOS) hydrolyzed in acidic medium with a pore former and the second type of layer(s) can be made from a sol of tetrabutyl titanate. Possibly some additives can be added in the sol, for example for preventing any cracks in the layer, like for example polyethylene glycol, etc. Though layers in the stack can be initially organo mineral, on the final glazing, once the layers are cured, the layers of the dielectric stack according to the invention are generally and advantageously (purely) mineral layers.

The layers (or the sol for making the sol-gel layers) of the dielectric stack according to the invention can be deposited by any type of wet coatings deposition processes such as by roller-coater, spray, dip-coating, spin-coating, screen printing, flow coating, slot-die, slide curtain coating, etc, several passages (generally at most two in view of the selected thicknesses) being possibly needed to reach the wished coating thicknesses. Drying steps can be integrated between each deposition of layers or once several layers are deposited, and a final curing treatment is generally performed to densify the layers and/or, where appropriate, generate the porosity of the low refractive index layer(s) by calcination of the pore-formers.

Though the dielectric stack according to the invention does not need any under or upper layer for obtaining the looked for effects and is preferably devoid of any under or upper layer in its coating area (and is thus in direct contact with the glass substrate), an under layer is not excluded, for example for a better adhesion of the stack to the glazing, and/or an upper layer is not excluded, for example for protection when the glazing is a laminated glass and the stack is on an internal surface in contact with a lamination interlayer.

For example, the solar control stack can be placed on a under-layer (or stack of layers) between the glass substrate and said solar control stack, said under-layer being in particular an alkali barrier or an adhesion promoter, or influencing the aspect in reflection of the plate, or being able to block a possible migration of ions, for example being based on silica or on silicon nitride or on an at least partially oxidized derivative of silicon chosen from silicon dioxide, sub-stoichiometric silicon oxides, oxycarbide, silicon oxynitride, or being in the form of tetrahalogeno- or tetraalkoxy-silane primer underlayer, the (geometric) thickness of such underlayer being preferably within a range from 5 to 30 nm, said underlayer possibly being deposited by wet coating or sol-gel process or possibly magnetron.

As another example, the stack can have a protective top (farer from the glass) layer formed from a sol-gel silica layer doped by chromatic nanoparticles, having low porosity (less than 20% in volume) and a thickness in the range of 1 µm and 3 µm, in the case for example when the stack is placed on an internal face (turned toward the intermediate thermoplastic interlayer) of a laminated glazing.

The glazing can also have other coatings on another face than the face(s) having a dielectric stack according to the invention. For example, the glazing can have on another face (preferably an internal face if the glazing is a laminated glass) an absorbing layer for improving the thermal and aesthetic comfort, for example a transition metal nitride or carbide, the (physical) thickness of such layer being preferably under 10 nm, said underlayer possibly being deposited by wet coating or sol-gel process, or eventually magnetron. It can also comprise purely decorative layer(s).

The dielectric stack according to the invention covers at least a part or a whole face (one of the two main faces of bigger dimension) of the coated glass sheet, this face being in particular an external face (not facing the user/passenger) in case the glazing is a monolithic glass, or being an internal face in case the glazing is a laminated glazing (unless it already has another functional coating like an absorbing layer needing to be inside, the stack then being preferably on an opposite face). Possibly, the glass sheet or sheets of the glazing according to the invention can also present a dielectric solar control stack on at least two different faces, the dielectric solar control stack on a face and the one on another face possibly being identical or different (while in particular each fulfilling the conditions of the solar control stack according to the invention) so as to possibly amplify the solar control effect. Thus, at least two different faces of the glazing according to the invention can be each coated with a dielectric solar control stack comprising the two types of layers according to the invention.

The glass substrate or substrates (for example when the glazing is a laminated or multiple glazing) of the glazing of the present invention are made of glass, in particular of soda-lime glass commonly used for vehicle panes, or possibly of other types of glass (for example borosilicate glass, quartz glass, aluminosilicate glass). Glass substrates/sheets with a thickness in the range from 0.8 mm to 6 mm, in particular from 1.1 mm to 2.5 mm, are preferably used, for example those with the standard thicknesses of 1.6 mm or 2.1 mm.

The glass sheets can be clear and colorless, but also tinted or colored, and they can be flat or bended. The glazing preferably presents intrinsically a light transmission (or transmittance) TL of at least 70 % for a wavelength of 550 nm included in the visible range. By "intrinsically" is meant that the substrate has such transmission in itself, without the presence of any coating. The light transmission TL is measured according to the standard EN 410 using the A illuminant (standardized lamp), and is the total transmission (in particular integrated in the visible range and weighted by the sensitivity of the human eye), taking into account both the direct transmission and the possible diffuse transmission, the measurement being made for example using a spectrophotometer fitted with an integrating sphere (in particular with the spectrophotometer marketed by the company Perkin Elmer under the reference Lambda 900)

The glazing according to the invention can possibly be a laminated glazing formed of two glass sheets and an intermediate layer, or even a multiple glazing comprising for example at least one first coated glass sheet according to the invention, and at least a second glass substrate consisting in a laminated glass substrate with a lamination interlayer. The intermediate layer is typically formed from at least one thermoplastic polymer, preferably ethylene vinyl acetate (EVA), polyvinyl butyral (PVB) or polyurethane (PU) or mixtures or copolymers or derivatives thereof, especially PVB. This intermediate layer/interlayer is typically formed from such a thermoplastic foil, its thickness being preferably from 0,2 mm to 2 mm, especially preferably from 0,3 mm to 1 mm.

The glazing according to the invention can also be provided with (or associated with) additional functional element (s) like a frame, connector (s), cable (s), control element (s)), etc.

The light transmission TL through the coated glazing according to the invention is preferably greater than 70%. The light reflection RL through the coated glazing according to the invention is also preferably less than or equal to 20%, or even less than or equal to 10%, at 550 nm.

The present invention also concerns a method (or process) for making the glazing according to the invention, from at least one glass sheet, wherein two types of layers are applied alternately on a least a part of at least a face of said glass sheet so as to form a dielectric stack having a (final) thickness of at most 1000 nm:
- a first type of layer(s) being, for each layer of this type, a porous layer of dielectric material presenting pores whose size is in the range from 20 to 120 nm, said layer having a refractive index of less than 1.4 and a thickness in the range from 50 to 200 nm, and
- a second type of layer(s) being, for each layer of this type, a layer of dielectric material having a refractive index of greater than or equal to 1.7 and a thickness in the range from 50 to 200 nm, each layer of the first type within the dielectric stack being deposited between two layers of the second type.

Preferably the layers are deposited in contact with one another and the depositions of the different layers are made successively, advantageously by wet coating processes, each layer of one type being possibly dried before the deposition of the following layer of the other type.

Each layer is preferably formed by sol-gel method comprising:
- the preparation of a liquid composition (the so-called sol) comprising at least a precursor of the material constituting the structure of said layer, said precursor being in particular a hydrolyzable compound such as a halide or an alkoxide or a titanate, in a solvent, in particular aqueous and/or alcoholic,
- the maturation of said sol and the growing of the molecules derivated from said precursor,
- the application/deposition of said sol on the surface to coat.

The deposition can be followed, if necessary, by a drying step (in particular at less than 100 °C) to evaporate the solvent and fix the layer, without however removing the sol ability to undergo subsequent structuring.

Depending on the type of layer, or looked-for porosity of the layer, the preparation step of the sol can also include a mixing with a pore-forming agent, preferably a solid pore former in the form of particles greater than or equal to 20 nm, in particular between 40 and 100 nm, and the maturation step of the sol can include the condensation of the precursor(s) around the pore-forming agent(s). As pore-former(s), inorganic or polymeric submicronic beads of size at least equal to 20 nm, preferably polymeric, in particular of PMMA, methyl methacrylate / acrylic acid copolymer, polystyrene, optionally in an aqueous solvent and/or alcohol, can be used. These steps relating to the pore-former(s) are in particular used for the first type of layer(s).

Depending on the type of layer, the preparation step can alternatively include the addition in the liquid composition of nanoparticles of a dopant, like titanium oxide nanoparticles, of diameters comprised between 10 and 100 or 120 nm. This step is in particular used for the second type of layer(s) if its refractive index needs to be increased to fall within the claimed range.

The step of deposition of each sol can be made by different wet coating techniques, like spraying, immersion (or dip coating), centrifugation (or spin coating), flow-coating, roll coating, slot-die, slide curtain coating, screen printing, etc.

The subsequent densification of the layers and the elimination of the pore-forming agent(s) can be made on the coated sheet by calcination at a temperature greater than or equal to 350 ° C. It can also be made by other techniques, like by adding a solvent for extracting the polymer, for example a THF in the case of PMMA, thermal treatment, in particular calcination, being nevertheless preferred. The heat treatment for the coated glazing (thus coinciding where appropriate with the elimination of the porous agent and/or with the sol condensation) can possibly correspond, when appropriate, to the tempering step and/or the bending or forming step of the glazing at a temperature of at least 500 °C. If the glazing made according to the invention is a laminated glass, a lamination treatment for assembling the glass sheets with an interlayer can also be operated for example by an autoclave process, a vacuum process, a calendering process, etc.

Where appropriate, the process can also comprise a cutting operation of the glass sheet(s), for example by water jet or by a mechanical tool, etc. followed by a shaping operation (grinding, bevelling, ...).

The glazing of the present invention is appropriate for equipping any aeronautical, maritime, land (rail, road) transport vehicle (cars, trucks, busses, commercial, agricultural, other vehicles like mobile homes or caravans), either as windshield, rear window, auto roof, side window, etc.

The following examples illustrate, without limiting it, the present invention. In all these examples, different samples of 10 cm x 10 cm or 6 cm x 15 cm have been tested and compared, all of them consisting in laminated glazing samples formed of two glass sheets separated by a thermoplastic interlayer, the tested coatings to compare being each deposited, in each related example, on an inner face (turned towards the interlayer) of one of the glass sheet. In each example, one of the glass sheets of the laminate was a 2.1 mm thick soda-lime-silica clear and neutral (without tint) float glass with a low iron content, namely in the present examples a glass commercialized by the company Saint-Gobain Glass under the reference Planiclear (designated afterwards by the abbreviation PLC) and presenting, when taken alone, a light transmission TL of 91%, the other glass sheet of the laminate was a 2.1 mm thick soda-lime-silica tinted float glass with a green tint presenting, when taken alone, a light transmission TL of 80%, namely in the present examples a glass of the reference TSA 3+ (designated afterwards by the abbreviation TSA) of the company Saint-Gobain Glass, and the thermoplastic interlayer was a 0.76 mm thick polyvinylbutyral layer (designated afterwards by the abbreviation PVB). The glass sheets obtained by float process were each first washed (with for example a solution of cerium oxide), rinsed and dried. Then the TSA3+ type glass sheet was coated by the coating to test (details of each tested coating being given in each related example hereafter), and the coated TSA3+ glass sheet was laminated with the PLC type glass sheet via the PVB interlayer (these sheets and interlayer being already cut to the sample size), the coated face of the TSA3+ type glass sheet being turned towards the interlayer, and the thus obtained samples of the laminates were then tested

The optical measures were made using a spectrophotometer sold under the reference Lambda 900 or lambda 1050 by the company Perkin Elmer. The TTS value was measured according to international standard ISO 13837, the light (or luminous) transmission TL and the luminous reflection RL were measured according to the standard EN 410 using the A illuminant (CIE- International Commission on Illumination-standard illuminant A representing typical, domestic, tungsten-filament lighting, its relative spectral power distribution being that of a Planckian radiator at a temperature of approximately 2856 K).

The refractive index at 550 nm and the thicknesses of the layers were measured by ellipsometry using an ellipsometer from the company Sentech.

### Example 1 according to the invention:

In this example the TSA3+ glass sheet was coated with the following three-layers purely dielectric stack : TiO₂ sol-gel layer/SiO₂ porous sol-gel layer/ TiO₂ sol-gel layer.

The thickness of the TiO₂ sol-gel layer in contact with the TSA3+ was 113 nm, the thickness of the SiO₂ sol-gel layer was 150 nm and the thickness of the other TiO₂ sol-gel layer was 160 nm, the total thickness of the stack being 423 nm.

The total glazing assembly (with the layer thickness in parenthesis) thus was : TSA3+ (2.1 mm) // TiO₂ sol-gel (113 mm)// SiO₂ porous sol-gel (150 mm)// TiO₂ sol-gel (160 mm)// PVB (0.76 mm) // PLC (2.1mm).

The TiO₂ sol-gel layers (layers of the second type according to the invention) were obtained from the addition drop by drop of an acidic aqueous solution to a solvent based solution of tetrabutyl titanate in more than 75 % of solvent chosen for example among isopropanol, ethanol, acetylacetone, or mixtures thereof, a polymer for preventing cracks in the layer being also present, like for example polyethylene glycol.

The SiO₂ porous sol-gel layer (layer of the first type according to the invention) was obtained from a sol of tetraethoxysilane and organic porogens formed of submicronic beads of PMMA of a size of the order of 60 to 80 nm so as to obtain a porosity of around 50% in volume with pores having a size between 40 and 100 nm. The sol-gel precursor was hydrolysed in acidic water (with a pH of 2 obtained by addition of hydrochloric acid to water) for several hours at room temperature, then a large volume of acidic water was added to involve the condensation of the sol-gel and the formation of the sol-gel network.

The high refractive index TiO₂ sol-gel was firstly deposited on the cleaned TSA3+ glass sheet with a roller-coater or by dip-coating, and the applied layer was dried. Then the SiO₂ sol-gel was deposited on the TiO₂ layer, in particular with a roller-coater, and dried at room temperature or with a dryer at minimum 120°C. Then the TiO₂ sol-gel was once again deposited on the SiO₂ sol-gel layer with a roller-coater, then dried at room temperature or with a dryer at minimum 120°C. The total glazing was thermally treated several minutes at high temperature (above 600 °C)

The refractive index of each of these TiO₂ sol-gel layers was above 1.8 and the refractive index of the SiO₂ sol-gel layer was 1.35.

Measurements of light transmission (TL) and light reflection (RL) of the glazing were performed, the obtained TL for the glazing being 71.7 %, which complies with the requirements for glazings used in vehicles as stipulated in the United Nations ECE R43 homologation program, and the obtained RL was 16.4%, which is satisfactory in terms of product aspect. The near infrared wavelength (between 700 and 2000 nm) transmission was also significantly reduced compared to an uncoated glazing.

As a comparison, using, for the coating, a stack with only one of the above sol-gel layers did not permit, either to obtain a TL above 70% required for the vehicles glazings (it was the case when using only one TiO₂ sol-gel layer), or had no impact on the near-infrared transmission reduction (it was the case when using only one SiO₂ sol-gel layer).

The achieved solar control performance in terms of TTS value obtained for the sample according to the present example was furthermore about 56%, which is quite performant in terms of solar control properties for a windshield.

As a comparison, a laminated glazing formed of two TSA3+ glass sheets of 2.1 mm thick each, with an interlayer of PVB of 0.76 mm, showed a TTS value of 65.9%, and a laminated glazing formed of two PLC glass sheets of 2.1 mm thick each, with an interlayer of PVB of 0.76 mm, showed a TTS value of 83.4%, these TTS values being much too high for the glazing to have sufficient anti-solar properties.

Furthermore, the sample according to the present example showed no high frequency damping contrary to common control solar glazings. In the reflection spectra in particular, there was no significant reflection in the infrared zone around 2500 nm contrary to what would be observed in case of use of a silver layer traditionally used for solar control. The achieved colors of the glazing were also quite neutral, these colors possibly being varied by adapting the refractive indexes and/or the thicknesses of the coating layers.

### Example 2 according to the invention:

Compared to example 1 of the invention, this example tested the same stack but with different thicknesses within the claimed range.

In this example the same coating than in example 1 was used except that the thickness of the TiO₂ sol-gel layer in contact with the TSA3+ was 74 nm, the thickness of the SiO₂ sol-gel layer was 150 nm and the thickness of the other TiO₂ sol-gel layer was 65 nm, the total thickness of the stack being 289 nm.

The obtained TL for the glazing was 73.9 % and the obtained RL was 15.7%. The near infrared wavelength transmission was also significantly reduced compared to an uncoated glazing, the TTS value was 57.2% and at the same time the glazing showed no high frequency damping, in particular no significant reflection in the infrared zone around 2500 nm. The achieved colors of the glazing were also quite neutral.

### Comparative example 1:

Compared to example 1 of the present invention, this comparative example tested the same type of stack but with at least one refractive index just outside the claimed range.

In this example the TiO₂ sol-gel layers of the stack of example 1 were replaced with layers having a refractive index of 1.8 and a respective thickness of 74 nm (for the layer in contact with TSA3+) and 65 nm, and the SiO₂ porous sol-gel of the first example was replaced with a layer of silica having a higher refractive index of 1.5 and a thickness of 100 nm, the total thickness of the stack being 239 nm.

The obtained TL for the glazing was 74 % and the obtained RL was 15.2%. Yet, the TTS value increased up to 62.9%; which is higher than the looked for values (well under 60%, in particular under 58% and preferably around 50%) and which should in any case not exceed 60%.

### Example 3 according to the invention:

Compared to example 1 of the invention, this example tested the same type of stack but with more preferred refractive indexes.

In this example the TiO₂ sol-gel layers of the stack of the first example were replaced with TiO₂ layers having a higher refractive index of 2 (by adding TiO₂ nanoparticles or reducing the porosity or modifying the crystalline structure) and a respective thickness of 128 nm (for the layer in contact with TSA3+) and 102 nm, and the SiO₂ porous sol-gel of the first example was replaced with a porous layer of silica having a lower refractive index of 1.3 and a thickness of 133 nm, the total thickness of the stack being 363 nm.

The obtained TL for the glazing was 74.1 % and the obtained RL was 15.4%. The TTS value was lowered to 54% (compared to example 1 of the invention) and at the same time the glazing showed no high frequency damping, in particular no significant reflection in the infrared zone around 2500 nm. The near infrared wavelength transmission was also significantly reduced compared to an uncoated glazing and the achieved colors of the glazing were quite neutral.

### Example 4 according to the invention:

Compared to example 1 of the invention, this example tested the same kind of stack but using another type of high refractive index layers.

In this example the TiO₂ sol-gel layers of the stack of example 1 were replaced with SiO₂ sol-gel layers obtained like the SiO₂ layer of example 1 except that the addition of pore-formers agents was replaced by the addition of at least 20% of TiO₂ nanoparticles sold under the reference Cristal ACTiV S5-300A by the company Tronox, giving layers of a refractive index of around 1.9. The SiO₂ layer used as the low refractive index layer was obtained like in the example 1 of the invention. The thicknesses of the layers were of the order of 60 nm each, the total thickness of the stack being around 180 mm.

The obtained TL for the glazing was above 75% and the TTS value was under 58% ; at the same time the glazing showed no high frequency damping, in particular no significant reflection in the infrared zone around 2500 nm. The near infrared wavelengths transmission was also significantly reduced compared to an uncoated glazing and the achieved colors of the glazing were quite neutral.

### Example 5 according to the invention:

Compared to example 1 of the invention, this example tested the same kind of stack but using other high and low refractive index layers fulfilling the criteria of the invention.

In this example the TiO₂ sol-gel layers of the stack of example 1 were replaced with TiO₂ sol-gel layers commercialized under the reference Lustreflex TLU0050 by the company Ferro and were applied by screen printing. The SiO₂ layer used as the low refractive index layer was replaced with a SiO₂ sol-gel layers commercialized under the reference Antireflex TLU0059 by the company Ferro and was applied by screen printing. The layers had the following respective refractive index : less than 1.4 for the SiO₂ layer and more than 1.7 for the TiO₂ layer. The thicknesses of the layers were of the order of 100 nm each, the total thickness of the stack being around 300 mm.

The obtained TL for the glazing was above 75% and the TTS value was under 58% ; at the same time the glazing showed no high frequency damping, in particular no significant reflection in the infrared zone around 2500 nm. The near infrared wavelengths transmission was also significantly reduced compared to an uncoated glazing and the achieved colors of the glazing were quite neutral.

### Example 6 according to the invention:

Compared to the example 1 of the invention, this example tested a five-layers stack instead of a three-layers stack.

In this example, the TSA3+ glass sheet was coated with the following five-layers purely dielectric stack : TiO₂ sol-gel layer/SiO₂ porous sol-gel layer/ TiO₂ sol-gel layer/ SiO₂ porous sol-gel layer/ TiO₂ sol-gel layer.

The thickness of the TiO₂ sol-gel layer in contact with the TSA3+ was 128 nm, the thickness of the SiO₂ sol-gel layer above it was 133 nm, the thickness of the TiO₂ sol-gel layer above it was 102 nm, the thickness of the SiO₂ sol-gel layer above it was 140 nm, and the thickness of the last TiO₂ sol-gel layer was 99 nm, the total thickness of the stack being 602 nm.

The total glazing assembly (with the layer thickness in parenthesis) thus was : TSA3+ (2.1 mm) // TiO₂ sol-gel (128 mm)// SiO₂ porous sol-gel (133 mm)// TiO₂ sol-gel (102 mm) // SiO₂ porous sol-gel (140 mm)// TiO₂ sol-gel (99 mm)// PVB (0.76 mm) // PLC (2.1mm).

The TiO₂ sol-gel layers and SiO₂ sol-gel layers were obtained like in example 1 and had the same refractive index. The obtained TL for the glazing was 74.1 % (higher and better than the one obtained for the 3-layers stack) and the obtained RL was 15.9%. The near infrared wavelength transmission was also significantly reduced compared to an uncoated glazing and the TTS value was 49.4% (better than the 3-layers stack in example 1) and at the same time the glazing showed no high frequency damping, in particular no significant reflection in the infrared zone around 2500 nm. The achieved colors of the glazing were also quite neutral. Further to the lower TTS, the higher obtained TL is an advantage as it allows possibly to use a stronger tinted inner glass instead of TSA3+. The 5-layers stack is also less sensitive to thickness variations than the 3-layers stack.

### Comparative example 2:

Compared to example 1, this example tested the same kind of stack but with at least a part of the layers not fulfilling the thicknesses criteria.

In this example the same coating than in the first example was used except that the thickness of the TiO₂ sol-gel layer in contact with the TSA3+ was 22 nm, the thickness of the SiO₂ sol-gel layer was 57 nm and the thickness of the other TiO₂ sol-gel layer was 23 nm, the total thickness of the stack being 102 nm.

The obtained TTS value was around 60%. The TiO₂ layers and whole stack revealed to be too thin to provide solar control properties and high transparency to high frequency.

The glazings according to the invention can in particular be used with advantage to produce a new range of windshields, rear windows, auto roofs, side windows, etc. for aeronautical, maritime, land (rail, road) transport vehicles

## Claims

1. Glazing, intended in particular to equip an automobile or vehicle, this glazing comprising at least a glass sheet coated, on at least a part of at least one of its faces, with at least a dielectric stack of layers comprising two types of layers:
- a first type of layer(s) being, for each layer of this type, a porous layer of dielectric material presenting pores whose size is in the range from 20 to 120 nm, said layer having a refractive index of less than 1.4 and a thickness in the range from 50 to 200 nm, and
- a second type of layer(s) being, for each layer of this type, a layer of dielectric material having a refractive index of greater than or equal to 1.7 and a thickness in the range from 50 to 200 nm, each layer of the first type within said dielectric stack being between two layers of the second type, the thickness of said dielectric stack being at most 1000 nm.

2. Glazing according to claim 1, **characterized in that** the first type of layer(s) and at least some or all of the layers of the second type of layer(s) are wet coating layers.

3. Glazing according to claim 1 or claim 2, **characterized in that** the first type of layer(s) and the second type of layer(s) are sol-gel layers.

4. Glazing according to any one of claim 1 to claim 3, **characterized in that** said first type of layer(s) has a refractive index less than or equal to 1.35, and preferably in the range from 1.2 to 1.35, and said second type of layer has a refractive index greater than or equal to 1.8, preferably in the range from 1.8 to 2.1, even more preferably from 1.9 to 2.1, and in particular from 2 to 2.1, the dielectric stack arrangement being based on constructive optical interferences and having solar control properties.

5. Glazing according to any one of claim 1 to claim 4, **characterized in that** said dielectric stack is a three-layers or a five-layers stack, the said two types of dielectric layers being built up alternately on top of one another, the different layers of the same type being either identical or different in thickness or composition.

6. Glazing according to any one of claim 1 to claim 5, **characterized in that** the thickness of said first type of layer(s) is in the range from 60 to 200 nm, more preferably in the range from 80 to 200 nm, notably in the range from 100 nm to 200 nm, in particular from 120 to 200 nm, the thickness of said second type of layer(s) is in the range from 55 nm to 180 nm, more preferably in the range from 60 nm to 180 nm, in particular from 65 to 165 nm, and the thickness of said dielectric stack is in the range from 170 nm to 850 nm, more preferably from 180 nm to 850 nm, in particular in the range from 200 to 800 nm.

7. Glazing according to any one of claim 1 to claim 6, **characterized in that** the layers of said stack are mineral layers and **in that** the stack, and preferably the whole coating including the stack on the zone covered by the stack, is devoid of any silver layer or tin oxide layer or similar conductive oxide layer.

8. Glazing according to any one of claim 1 to claim 7, **characterized in that** the proportion of pores in volume in said first type of layer(s) is between 20% and 90%, preferably in the range from 30 to 80%, and in particular in the range from 35 to 75% in volume.

9. Glazing according to any one of claim 1 to claim 8, **characterized in that** said first type of layer(s) is formed of silica, the content of silica in the layer preferably being at least 80 wt% or at least 90 wt%.

10. Glazing according to any one of claim 1 to claim 9, **characterized in that** a layer of titanium dioxide is used as a dielectric layer of the second type in the stack and /or a layer of a material selected from the group of metalloid oxides, in particular and preferably SiO₂, with a doping agent included, preferably TiO₂ nanoparticles, most preferably rutile-type titanium dioxide nanoparticles, is used as a dielectric layer of the second type.

11. Glazing according to any one of claim 1 to claim 10, **characterized in that** at least two different faces of the glazing are each coated with a dielectric solar control stack comprising said two types of layers.

12. Process for making a glazing, in particular according to claim 1 to 11, from at least one glass sheet, wherein two types of layers are applied alternately on a least a part of at least a face of said glass sheet so as to form a dielectric stack having a thickness of at most 1000 nm:
- a first type of layer(s) being, for each layer of this type, a porous layer of dielectric material presenting pores whose size is in the range from 20 to 120 nm, said layer having a refractive index of less than 1.4 and a thickness in the range from 50 to 200 nm, and
- a second type of layer(s) being, for each layer of this type, a layer of dielectric material having a refractive index of greater than or equal to 1.7 and a thickness in the range from 50 to 200 nm, each layer of the first type within the dielectric stack being deposited between two layers of the second type.

13. Process according to claim 12, **characterized in that** the depositions of the different layers are made successively, advantageously by wet coating processes, each layer being preferably formed by sol-gel method.

14. Process according to any one of claim 12 to claim 13, **characterized in that**, for the first type of layer(s), the preparation step of the sol includes a mixing with a pore-forming agent, preferably a solid pore former in the form of particles greater than or equal to 20 nm, in particular between 40 and 100 nm, and the maturation step of the sol possibly includes the condensation of the precursor(s) of the material(s) constituting the structure of said first type of layer(s) around said pore-forming agent, inorganic or polymeric submicronic beads, preferably polymeric, in particular of PMMA type, being in particular used as pore-former.

15. Process according to any one of claim 12 to claim 14, **characterized in that**, for the second type of layer(s), the preparation step of the sol includes the addition in the liquid composition of nanoparticles of a dopant, like titanium oxide nanoparticles, of size comprised between 10 and 120 nm.

## Patentansprüche

1. Verglasung, die insbesondere zum Ausrüsten eines Kraftfahrzeugs oder Fahrzeugs vorgesehen ist, diese Verglasung umfassend mindestens eine Glasscheibe, die auf mindestens einem Teil mindestens einer ihrer Flächen beschichtet ist, mit mindestens einem dielektrischen Stapel von Schichten, umfassend zwei Arten von Schichten:
- eine erste Art von Schicht(en), die, für jede Schicht dieser Art, eine poröse Schicht aus dielektrischem Material ist, die Poren vorweist, deren Größe im Bereich von 20 bis 120 nm liegt, wobei die Schicht einen Brechungsindex von weniger als 1,4 und eine Dicke im Bereich von 50 bis 200 nm aufweist, und
- eine zweite Art von Schicht(en), die, für jede Schicht dieser Art, eine Schicht aus dielektrischem Material ist, die einen Brechungsindex von mehr als oder gleich 1,7 und eine Dicke im Bereich von 50 bis 200 nm aufweist, wobei jede Schicht der ersten Art innerhalb des dielektrischen Stapels zwischen zwei Schichten der zweiten Art liegt, wobei die Dicke des dielektrischen Stapels höchstens 1000 nm beträgt.

2. Verglasung nach Anspruch 1, **dadurch gekennzeichnet, dass** die erste Art von Schicht(en) und mindestens einige oder alle der Schichten der zweiten Art von Schicht(en) Nassbeschichtungen sind.

3. Verglasung nach Anspruch 1 oder Anspruch 2,
**dadurch gekennzeichnet, dass** die erste Art von Schicht(en) und die zweite Art von Schicht(en) Sol-Gel-Schichten sind.

4. Verglasung nach einem der Ansprüche 1 bis 3,
**dadurch gekennzeichnet, dass** die erste Art von Schicht(en) einen Brechungsindex kleiner als oder gleich 1,35 und vorzugsweise im Bereich von 1,2 bis 1,35 aufweist und die zweite Art von Schicht einen Brechungsindex größer als oder gleich 1,8, vorzugsweise im Bereich von 1,8 bis 2,1, noch mehr bevorzugt von 1,9 bis 2,1 und insbesondere von 2 bis 2,1 aufweist, wobei die dielektrische Stapelanordnung auf konstruktiven optischen Interferenzen basiert und Solarsteuerungseigenschaften aufweist.

5. Verglasung nach einem der Ansprüche 1 bis 4,
**dadurch gekennzeichnet, dass** der dielektrische Stapel ein dreischichtiger oder ein fünfschichtiger Stapel ist, wobei die zwei Arten von dielektrischen Schichten abwechselnd übereinander aufgebaut sind, wobei die unterschiedlichen Schichten derselben Art in der Dicke oder Zusammensetzung entweder identisch oder unterschiedlich sind.

6. Verglasung nach einem der Ansprüche 1 bis 5,
**dadurch gekennzeichnet, dass** die Dicke der ersten Art von Schicht(en) im Bereich von 60 bis 200 nm, mehr bevorzugt im Bereich von 80 bis 200 nm, insbesondere im Bereich von 100 nm bis 200 nm, insbesondere von 120 bis 200 nm liegt, die Dicke der zweiten Art von Schicht(en) im Bereich von 55 nm bis 180 nm, mehr bevorzugt im Bereich von 60 nm bis 180 nm, insbesondere von 65 bis 165 nm liegt, und die Dicke des dielektrischen Stapels im Bereich von 170 nm bis 850 nm, mehr bevorzugt von 180 nm bis 850 nm, insbesondere im Bereich von 200 bis 800 nm liegt.

7. Verglasung nach einem der Ansprüche 1 bis 6,
**dadurch gekennzeichnet, dass** die Schichten des Stapels Mineralschichten sind, und dass der Stapel, und vorzugsweise die gesamte Beschichtung einschließlich des Stapels auf der durch den Stapel bedeckten Zone, frei von einer Silberschicht oder einer Zinnoxidschicht oder einer ähnlichen leitfähigen Oxidschicht ist.

8. Verglasung nach einem der Ansprüche 1 bis 7,
**dadurch gekennzeichnet, dass** der Volumenanteil an Poren in der ersten Art von Schicht(en) zwischen 20 Vol.-% und 90 Vol.-%, vorzugsweise im Bereich von 30 bis 80 Vol.-% und insbesondere im Bereich von 35 bis 75 Vol.-% liegt.

9. Verglasung nach einem der Ansprüche 1 bis 8,
**dadurch gekennzeichnet, dass** die erste Art von Schicht(en) aus Siliciumdioxid gebildet ist, wobei der Gehalt an Siliciumdioxid in der Schicht vorzugsweise mindestens 80 Gew.-% oder mindestens 90 Gew.-% beträgt.

10. Verglasung nach einem der Ansprüche 1 bis 9,
**dadurch gekennzeichnet, dass** eine Schicht aus Titandioxid als eine dielektrische Schicht der zweiten Art in dem Stapel verwendet wird und/oder eine Schicht aus einem Material, ausgewählt aus der Gruppe von metalloiden Oxiden, insbesondere und vorzugsweise SiO₂, mit einem eingeschlossenen Dotierungsmittel, vorzugsweise TiO₂-Nanoteilchen, am meisten bevorzugt Titandioxidnanoteilchen vom Rutil-Typ, als eine dielektrische Schicht der zweiten Art verwendet wird.

11. Verglasung nach einem der Ansprüche 1 bis 10,
**dadurch gekennzeichnet, dass** mindestens zwei unterschiedliche Flächen der Verglasung jeweils mit einem dielektrischen Solarsteuerungsstapel, umfassend die zwei Arten von Schichten, beschichtet sind.

12. Verfahren zum Herstellen einer Verglasung, insbesondere nach Anspruch 1 bis 11, aus mindestens einer Glasscheibe, wobei zwei Arten von Schichten abwechselnd auf mindestens einem Teil mindestens einer Fläche der Glasscheibe aufgebracht werden, um einen dielektrischen Stapel, der eine Dicke von höchstens 1000 nm aufweist, zu bilden:
- eine erste Art von Schicht(en), die, für jede Schicht dieser Art, eine poröse Schicht aus dielektrischem Material ist, die Poren vorweist, deren Größe im Bereich von 20 bis 120 nm liegt, wobei die Schicht einen Brechungsindex von weniger als 1,4 und eine Dicke im Bereich von 50 bis 200 nm aufweist, und
- eine zweite Art von Schicht(en), die, für jede Schicht dieser Art, eine Schicht aus dielektrischem Material ist, die einen Brechungsindex von größer als oder gleich 1,7 und eine Dicke im Bereich von 50 bis 200 nm aufweist, wobei jede Schicht der ersten Art innerhalb des dielektrischen Stapels zwischen zwei Schichten der zweiten Art abgeschieden ist.

13. Verfahren nach Anspruch 12, **dadurch gekennzeichnet, dass** die Abscheidungen der unterschiedlichen Schichten nacheinander, vorteilhafterweise durch Nassbeschichtungsverfahren, hergestellt werden, wobei jede Schicht vorzugsweise durch Sol-Gel-Verfahren gebildet wird.

14. Verfahren nach einem der Ansprüche 12 bis 13,
**dadurch gekennzeichnet, dass,** für die erste Art von Schicht(en), der Herstellungsschritt des Sols ein Mischen mit einem Porenbildungsmittel, vorzugsweise einem festen Porenbildner in Form von Teilchen größer als oder gleich 20 nm, insbesondere zwischen 40 und 100 nm, einschließt, und der Reifungsschritt des Sols gegebenenfalls die Kondensation des Vorläufers oder der Vorläufer des Materials oder der Materialien, die die Struktur der ersten Art von Schicht(en) um das Porenbildungsmittel herum darstellen, anorganische oder polymere submikronische Kügelchen, vorzugsweise Polymere, insbesondere vom PMMA-Typ, die insbesondere als Porenbildner verwendet werden, einschließt.

15. Verfahren nach einem der Ansprüche 12 bis 14,
**dadurch gekennzeichnet, dass,** für die zweite Art von Schicht(en), der Herstellungsschritt des Sols die Zugabe in die flüssige Zusammensetzung von Nanoteilchen eines Dotierstoffs, wie Titanoxidnanoteilchen, einer Größe, die zwischen 10 und 120 nm liegt, einschließt.

## Revendications

1. Vitrage, destiné notamment à équiper une automobile ou un véhicule, ce vitrage comprenant au moins une feuille de verre revêtue, sur au moins une partie d'au moins l'une de ses faces, d'au moins un empilement diélectrique de couches comprenant deux types de couches :
- un premier type de couche(s) étant, pour chaque couche de ce type, une couche poreuse de matériau diélectrique présentant des pores dont la taille est dans la plage allant de 20 à 120 nm, ladite couche ayant un indice de réfraction inférieur à 1,4 et une épaisseur dans la plage allant de 50 à 200 nm, et
- un second type de couche(s) étant, pour chaque couche de ce type, une couche de matériau diélectrique ayant un indice de réfraction supérieur ou égal à 1,7 et une épaisseur dans la plage allant de 50 à 200 nm, chaque couche du premier type au sein dudit empilement diélectrique étant entre deux couches du second type, l'épaisseur dudit empilement diélectrique étant d'au plus 1000 nm.

2. Vitrage selon la revendication 1, **caractérisé en ce que** le premier type de couche(s) et au moins certaines ou la totalité des couches du second type de couche(s) sont des couches à revêtement humide.

3. Vitrage selon la revendication 1 ou la revendication 2,
**caractérisé en ce que** le premier type de couche(s) et le second type de couche(s) sont des couches sol-gel.

4. Vitrage selon l'une quelconque de la revendication 1 à la revendication 3, **caractérisé en ce que** ledit premier type de couche(s) a un indice de réfraction inférieur ou égal à 1,35, et de préférence dans la plage allant de 1,2 à 1,35, et ledit second type de couche a un indice de réfraction supérieur ou égal à 1,8, de préférence dans la plage allant de 1,8 à 2,1, même plus préférablement de 1,9 à 2,1, et en particulier de 2 à 2,1, l'agencement d'empilement diélectrique étant basé sur des interférences optiques constructives et ayant des propriétés de contrôle solaire.

5. Vitrage selon l'une quelconque de la revendication 1 à la revendication 4, **caractérisé en ce que** ledit empilement diélectrique est un empilement à trois couches ou à cinq couches, lesdits deux types de couches diélectriques étant construits alternativement l'un au-dessus de l'autre, les différentes couches d'un même type étant soit identiques, soit différentes en épaisseur ou en composition.

6. Vitrage selon l'une quelconque de la revendication 1 à la revendication 5, **caractérisé en ce que** l'épaisseur dudit premier type de couche(s) est dans la plage allant de 60 à 200 nm, plus préférablement dans la plage allant de 80 à 200 nm, notamment dans la plage allant de 100 nm à 200 nm, en particulier de 120 à 200 nm, l'épaisseur dudit second type de couche(s) est dans la plage allant de 55 nm à 180 nm, plus préférablement dans la plage allant de 60 nm à 180 nm, en particulier de 65 à 165 nm, et l'épaisseur dudit empilement diélectrique est dans la plage allant de 170 nm à 850 nm, plus préférablement de 180 nm à 850 nm, en particulier dans la plage allant de 200 à 800 nm.

7. Vitrage selon l'une quelconque de la revendication 1 à la revendication 6, **caractérisé en ce que** les couches dudit empilement sont des couches minérales et **en ce que** l'empilement, et de préférence le revêtement complet comportant l'empilement sur la zone couverte par l'empilement, est dépourvu d'une quelconque couche d'argent ou couche d'oxyde d'étain ou couche d'oxyde conducteur similaire.

8. Vitrage selon l'une quelconque de la revendication 1 à la revendication 7, **caractérisé en ce que** la proportion de pores en volume dans ledit premier type de couche(s) est comprise entre 20 % et 90 %, de préférence dans la plage allant de 30 à 80 %, et en particulier dans la plage allant de 35 à 75 % en volume.

9. Vitrage selon l'une quelconque de la revendication 1 à la revendication 8, **caractérisé en ce que** ledit premier type de couche(s) est formé de silice, la teneur en silice dans la couche étant de préférence d'au moins 80 % en poids ou au moins 90 % en poids.

10. Vitrage selon l'une quelconque de la revendication 1 à la revendication 9, **caractérisé en ce qu'**une couche de dioxyde de titane est utilisée en tant que couche diélectrique du second type dans l'empilement et/ou une couche d'un matériau choisi dans le groupe d'oxydes de métalloïde, en particulier et de préférence SiO₂, avec un agent dopant inclus, de préférence des nanoparticules de TiO₂, le plus préférablement des nanoparticules de dioxyde de titane de type rutile, est utilisée en tant que couche diélectrique du second type.

11. Vitrage selon l'une quelconque de la revendication 1 à la revendication 10, **caractérisé en ce qu'**au moins deux faces différentes du vitrage sont revêtues chacune d'un empilement diélectrique de contrôle solaire comprenant lesdits deux types de couche.

12. Processus de fabrication d'un vitrage, en particulier selon la revendication 1 à 11, à partir d'au moins une feuille de verre, dans lequel deux types de couches sont appliqués en alternance sur au moins une partie d'au moins une face de ladite feuille de verre de façon à former un empilement diélectrique ayant une épaisseur d'au plus 1000 nm :
- un premier type de couche(s) étant, pour chaque couche de ce type, une couche poreuse de matériau diélectrique présentant des pores dont la taille est dans la plage allant de 20 à 120 nm, ladite couche ayant un indice de réfraction inférieur à 1,4 et une épaisseur dans la plage allant de 50 à 200 nm, et
- un second type de couche(s) étant, pour chaque couche de ce type, une couche de matériau diélectrique ayant un indice de réfraction supérieur ou égal à 1,7 et une épaisseur dans la plage allant de 50 à 200 nm, chaque couche du premier type au sein de l'empilement diélectrique étant déposée entre deux couches du second type.

13. Processus selon la revendication 12, **caractérisé en ce que** les dépôts des différentes couches sont réalisés successivement, avantageusement par des processus de revêtement humide, chaque couche étant de préférence formée par un procédé sol-gel.

14. Processus selon l'une quelconque de la revendication 12 à la revendication 13, **caractérisé en ce que,** pour le premier type de couche(s), l'étape de préparation du sol comporte un mélange avec un agent de formation de pores, de préférence un agent porogène solide sous la forme de particules supérieures ou égales à 20 nm, en particulier entre 40 et 100 nm, et l'étape de maturation du sol comporte éventuellement la condensation du ou des précurseur(s) du ou des matériau(x) constituant la structure dudit premier type de couche(s) autour dudit agent de formation de pore, des billes submicroniques inorganiques ou polymères, de préférence polymères, notamment de type PMMA, étant utilisées en particulier en guise d'agent porogène.

15. Processus selon l'une quelconque de la revendication 12 à la revendication 14, **caractérisé en ce que,** pour le second type de couche(s), l'étape de préparation du sol comporte l'ajout dans la composition liquide de nanoparticules d'un dopant, de type nanoparticules d'oxyde de titane, d'une taille comprise entre 10 et 120 nm.
